# EUROPEAN PATENT APPLICATION

(11) **EP 1 111 914 A1**
(43) Date of publication of application: **27.06.2001**
(21) Application number: 00311314.9
(22) Date of filing: 18.12.2000
(51) Int. Cl.: H04N 5/445

(54) **TV receiving and internet browsing apparatus**

(30) Priority: 23.12.1999 EP 99310559
(71) Applicant: Access Devices Limited, London W14 8TS (GB)
(72) Inventor: Walton, Anthony Stephen, Staines, Middlesex TW18 3QP (GB)
(74) Representative: Skone James, Robert Edmund

(57) **Abstract**

TV receiving apparatus comprises a receiver (7) for receiving broadcast TV signals, a TV display (5), and a control system (6) for controlling the display of received TV signals on the TV display 5. The control system (6) includes an Internet browser (11) connectable to an Internet server (1) to supply URLs, selected by a user, to the server, to receive corresponding web pages, and to adapt and display the received web pages in a first region (20) of the TV display. The control system (6) is also adapted to cause information different from the selected web page and received from the server (1) to be displayed in a second region (22) of the TV display independently of the web page(s) displayed in the first region (20).

## Description

The invention relates to television receiving and Internet browsing apparatus.

Conventional TV receiving apparatus simply receives broadcast TV and teletext services. Recently, interactive TV, which can be implemented in both analogue and digital form, has been developed to allow remote users to play games, possibly linked with a displayed TV channel, and to carry out other tasks such as on-line shopping. To that end, a control system is provided, usually in a set-top box (STB), to extract from broadcast signals the required text or graphics overlay information which is then displayed under the control of the user and to transmit information back to a central location.

Attempts have been made to enable such television receiving apparatus to provide access to the Internet but this has not happened to any significant extent due to the different display requirements of TV displays as compared with computer monitors, and due to the highly developed PC Internet browser technology.

An important aspect of the Internet is the provision of advertisements to users. Conventionally, with PC-based browsers, an advertisement may be presented to a user as part of a displayed web page. However, as soon as a user selects a different web page, the advertisement will disappear. This significantly reduces the impact of any one advertisement. NetZero Inc. based in the USA is one company which has recently introduced a ZeroPort feature for use with PC browsers which enables advertisements to be targeted to users. An example of such a system is described in WO00/54201.

In accordance with one aspect of the present invention a TV receiving apparatus comprises:
a) a receiver for receiving broadcast TV signals;
b) a TV display; and,
c) a control system for controlling the display of received TV signals on the TV display,
the control system including an Internet browser connectable to an Internet server to supply URLs, selected by a user, to the server, to receive corresponding web pages and to adapt and display the received web pages in a first region of the TV display, the control system being adapted to cause information different from the selected web page and received from the server to be displayed in a second region of the TV display independently of the web page(s) displayed in the first region and wherein the user is unable to cause the display in the second region of information selected by the user.

We have realized that a key to developing the use of TV receivers with the Internet is the ability to provide advertisers with guarantees that their advertisements will be viewed for known periods while enabling them to target the very wide TV audience as compared with the PC audience. We also realized that this could be achieved by making use of the control system already being used and developed for interactive TV, although dedicated browser control systems could also be used. The control system will also convert the Internet format signals to TV display format. The control system can be conveniently contained within a set-top box.

Thus, the invention provides a new type of TV control system which includes an Internet browser and which divides the display into two (or more) display regions. The first region is used to display user selected web pages in the usual way while the second region displays information which is not under the control of the user. This enables the second region to be used to display advertisements or other information for much longer than the time for which any particular web page is being viewed. Advertisers can then target particular advertisements for any length of time while the apparatus is being operated and achieve a much better exposure.

The information disclosed in the second region can be selected independently of the receiving apparatus or alternatively could be selected in accordance with previous usage of the Internet either within a current session or on previous occasions. Thus, if the server detects that the user of the apparatus accesses particular types of web page then the information it causes to be displayed in the second region can be related to that type.

There are a number of different ways in which the invention can be implemented as it is not limited to the use of television based systems.

Thus, in accordance with a second aspect of the present invention, we provide Internet browsing apparatus comprising a display; and
a control system including an Internet browser connectable to an Internet server to supply URLs, selected by a user, to the server, to receive corresponding web pages and to display the received web pages in a first region of the display, the control system being adapted to cause information different from the selected web page and received from the server to be displayed in a second region of the display independently of the web page(s) displayed in the first region and wherein the user is unable to cause the display in the second region of information selected by the user.

In one approach, the information displayed in the second region corresponds to a second web page which may be accessed with an appropriate URL. The browser thus needs to be adapted to control the display of two web pages simultaneously. A URL relating to the information to be displayed in the second region may be generated by the browser itself and this may be retained in non-volatile memory associated with the control system. Alternatively, the server may be adapted to supply the browser with the URL for the second region. In either case, the content of the information in the second web page can be varied either by the server loading different information into the second web page at a common URL, by redirecting the common URL to a further URL, or by changing the URL to point to an alternative "second web page". The user of the browser will therefore be unable to control the URLs relating to the second region.

Preferably, the second region will form part of a banner located in an upper or lower region of the display with the banner taking the form of a rectangle. Typically at least one edge of the banner will abut the edge of the display, the banner being generally elongate in a first direction and having a corresponding elongate edge arranged to abut the edge of the display. Preferably the banner will be arranged to extend fully across the display so as to abut two opposing edges. Furthermore, the banner may include browser control icons, allowing interaction by the user so as to control the browser. The user may also interact with the second region so as to cause the display of related information within the first region.

This approach takes advantage of the existing division between the browser control region of the display and the region dedicated to the display of web pages and provides an extra function for the browser banner.

In another approach, the information displayed in the second region may be defined by a second HTML frame appended to a first HTML frame defining a web page selected by the user. Typically this will be performed by the Internet server. In this case, a separate URL relating to the second region is not required.

The invention also relates to an Internet access system comprising TV receiving apparatus according to the first aspect of the invention or Internet browsing apparatus according to the second aspect of the invention; and an Internet server which can be selectively coupled with the said apparatus.

Preferably the information displayed in the second region will be regularly updated by the Internet server, for example this may be achieved each time the information is to be refreshed to the apparatus. The Internet server may also monitor the URLs requested by the user and update the information to be displayed in the second region with related data. In the context of advertising, this monitoring may be particularly useful as advertising material can be targeted to specific browsers or users depending upon the types of web pages previously viewed. A database may also be provided to record data concerning the information provided to particular browsers.

Some examples of apparatus and systems according to the present invention will now be described with reference to the accompanying drawings, in which:-
Figure 1 is a block diagram of an Internet access system;
Figure 2 is a block diagram of part of the set-top box shown in Figure 1; and,
Figure 3 is a schematic view of a typical display on the monitor of Figure 1.

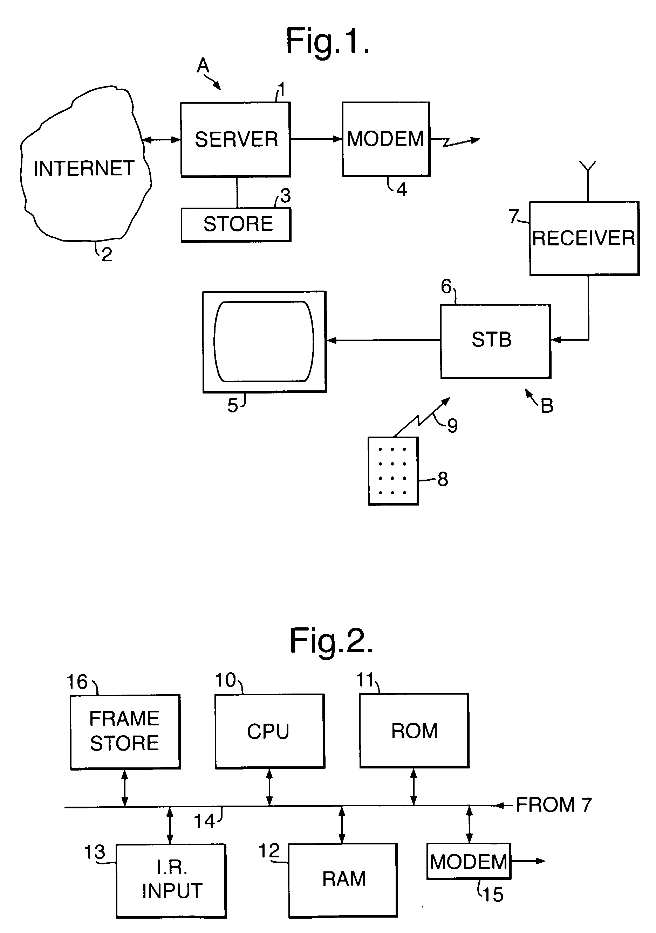

Figure 1 illustrates part of an Internet access system. The system comprises an Internet service provider (ISP) A who provides apparatus including a server 1 for connection to the Internet 2, a store 3 connected to the server 1, and a modem 4 connected to the server 1 for transmitting signals generated by the server over a public switched telephone network (PSTN). The system also comprises a large number of remote TV receiving apparatus, one of which B is shown. Each set of apparatus B comprises a television screen 5 coupled via a STB 6 to a TV signal receiver 7. The STB 6 is controlled from a handset 8 which generates infrared signals 9 in a conventional manner.

Each of the apparatus B has a generally conventional form and so will not be described in detail. However, as can be seen in Figure 2, the STB 6 at least includes a CPU 10, ROM 11, RAM 12 and an infrared input device 13 for receiving the signals 9, all connected to an address/data bus 14. A frame store 16 may also be provided. The STB 6 also includes a modem 15 for transmitting signals across the PSTN (not shown) to the modem 4 connected to the server 1.

The software stored in the ROM 11 will enable the CPU 10 to control the TV channel to be displayed on the TV 5 in response to user input and also to provide other information such as an electronic program guide, text and graphics relating to games and the like as supplied from a central computer system (not shown). An example is described in more detail in EP-A-0873772.

When a user wishes to access the Internet, he issues suitable control signals from the handset 8 to the STB 6. These signals are received by the input device 13 where they are decoded and fed to the CPU 10. The CPU 10 then causes the modem 15 to dial up the ISP A so that a connection can be made with the server 1.

The ROM 11 includes Internet browser software to which the CPU 10 responds to display a home page on the TV 5. In general the TV 5 will therefore switch between displaying a full screen television signal, to an Internet browser display under the control of the user. However, as an alternative, the display may be divided in a split screen manner to display the television and Internet simultaneously.

The browser makes use of hard code in the ROM 11 to divide the browser display into separate dedicated regions within the frame store 16 which may be provided using video RAM.

The dedicated regions of the frame store 16 reflect those of the display, with the particular video memory addresses corresponding to specific display regions. These regions are fixed within the frame store 16, with each region having corresponding predetermined dimensions on the display. In general the regions will abut rather than overlap such that information intended for the display within one region is not "hidden" behind that displayed in another. Appropriate scrolling mechanisms may therefore be used.

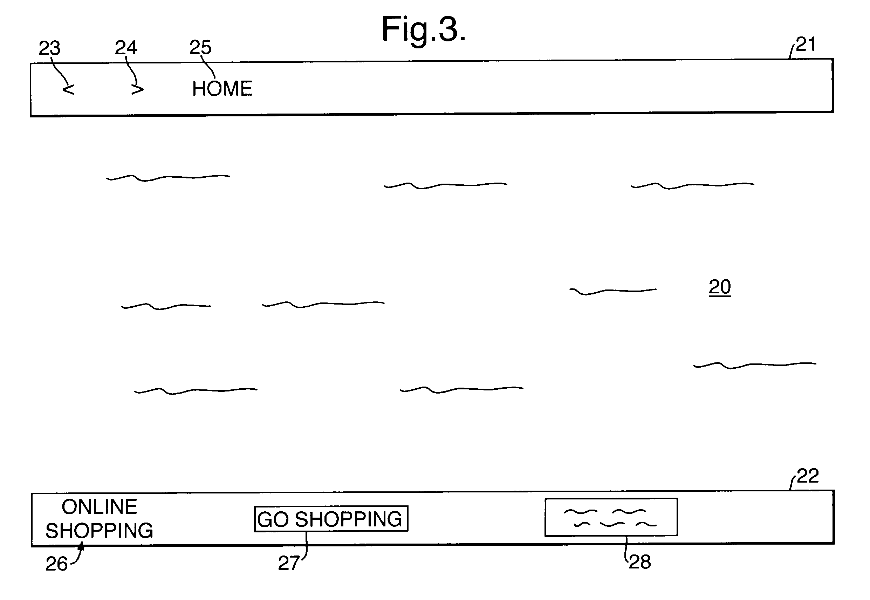

As shown schematically in Figure 3, the regions include a main or first region 20 within which web pages corresponding to user selected URLs will appear and one, or in this case two, second regions 21,22 above and below the region 20 respectively in the form of banners.

Although the second region(s) may take any shape, banners provide a convenient means of efficiently partitioning the display in a user friendly manner. The banners of the present example are regions which are elongate in one direction (usually the horizontal axis) and extend across the full width of the display. They may be arranged at the top or bottom of the display so as to abut the top or bottom edge respectively, in order to maximise the use of display space. Conversely banners with a vertical orientation can be provided but these reduce the width of the screen, which is less desirable for reading text arranged in horizontal lines. In this case the second regions 21,22 may not be resized or moved by the user.

In Figure 3, the upper region 21 includes certain conventional icons such as "previous page", "next page" and "home" icons 23-25 while the region 22 is dedicated to displaying advertisements as will be described below.

The region 22 includes certain fixed graphics 26,27 and a small window 28 within which advertisements will appear. The window 28 may be alternatively arranged to fill the entire region 22. Initially, when the browser has been activated but before it has logged on to the Internet, the region 28 will be caused to display text or graphics information stored in the ROM 11.

Once the browser has successfully logged on to the Internet, the display within the window 28 will be refreshed. There are two main ways in which this can be achieved.

In the first approach, the browser includes a special URL in the ROM 11 which it transmits to the server 1 independently of any URL selected by the user. The server 1 accesses the page indicated by the special URL and this is transmitted back to the CPU 10 and used to constitute the information within the window 28. Separately and independently, the user can selected URLs in the usual way and the appropriate web pages are accessed by the server 1, returned to the remote user B via the modem 4 and modem 15 and displayed within the region 20.

Periodically, the browser will resend the special URL so as to update the content of the window 28. This can be done whenever the main output is idle.

In an alternative approach, the server 1 can append the special advertisement data as a second frame to a first HTML frame corresponding to the web page selected by the user. In this case, any web page requested by a user is displayed towards the top of the TV display 5 while the advertisement is displayed in the bottom part.

If the user wishes to respond to the advertisement in the window 28, he can click either on the window 28 (known as "clickthrough"), or click on the "go shopping" icon 27 which will cause the server 1 to access a corresponding URL and retrieve that web page in a conventional manner. That web page will then be displayed in the main region 20. The retrieved web page could be the advertiser's home page or a commercial ordering page. However, the display of the advertisement in the window 28 will continue in the normal manner.

The advertisements will generally comprise mixtures of text and graphics. Their effectiveness may be increased by providing animation, for example as rapidly displayed consecutive frames or by providing a slide show of related or unrelated advertisements. Preferably the advertisements will therefore be designed for the particular size of window 28 used by the browser.

The content of the advertisements is most easily determined by the server 1 which can simply change the file stored at a particular URL in order to change the advertisement. The browser then always uses the same URL for the display 28. The server 1 can alternatively redirect the URL from the browser to further URLs. Another way is to control the advertisements using CGI scripting, asking the server 1 for the next advertisement URL every time the advertisement needs a refresh.

The advertisement "page" can be refreshed in one of two ways:
· One is to use JavaScript to talk to the server. The server will use CGI or Java to pass down the version of advert required, which is compared to the current advert within the box. If a new advert is needed, the "advert" frame is redirected using the location object in JavaScript.
· Another way is to use HTTP redirect to relocate the "advert" frame to a new advert URL.

The server 1 is tied into a database 3 containing a diary of each advert, version, when they become live and for how long. The database might contain a large number of URLs if the server 1 is not provided with the advertisment files directly. Also, information can be stored for individual users, such as which adverts are best for them depending on the type of content they look for when browsing the web. This information can be calculated and maintained either by a "Cookie Collection" or using applets. Adverts can therefore be targeted to users, thus increasing the chance of a "clickthrough" response by the user. A suitable data mining process can be used for this purpose.

When the browser requests a refresh, passing the version of advert back to the server, this information is compared and the browser is redirected to a new advert URL, if need be.

JavaScript keeps a timer which will regularly update the server on the advert it is displaying and for how long. Once it is time to update to a new advert, the server replies with a redirection, telling the browsing the URL of the new advert and version information.

The total time of an advert is written back into the database for each individual set-top box and the grand total of time for that version of advert. This information may then be relayed to the corresponding advertisers.

The signals received by the modem 15 will typically be formatted for use with a conventional PC monitor display based on an area of 800x600 square pixels. A conventional TV display, however, is defined by 600x400 rectangular pixels and so the CPU 10 will carry out a conventional modification algorithm to convert the incoming signals to a compatible TV format, i.e. with changes in pixel size, pixel screen and colour.

## Claims

1. A TV receiving apparatus comprising:
a) a receiver for receiving broadcast TV signals;
b) a TV display; and,
c) a control system for controlling the display of received TV signals on the TV display,
the control system including an Internet browser connectable to an Internet server to supply URLs, selected by a user, to the server, to receive corresponding web pages and to adapt and display the received web pages in a first region of the TV display, the control system being adapted to cause information different from the selected web page and received from the server to be displayed in a second region of the TV display independently of the web page(s) displayed in the first region and wherein the user is unable to cause the display in the second region of information selected by the user.

2. Apparatus according to claim 1, wherein the control system is provided in a set-top box.

3. Internet browsing apparatus comprising a display; and
a control system including an Internet browser connectable to an Internet server to supply URLs, selected by a user, to the server, to receive corresponding web pages and to display the received web pages in a first region of the display, the control system being adapted to cause information different from the selected web page and received from the server to be displayed in a second region of the display independently of the web page(s) displayed in the first region and wherein the user is unable to cause the display in the second region of information selected by the user.

4. Apparatus according to any of the preceding claims, wherein the control system is adapted to generate a URL to cause the information to be received from the server.

5. Apparatus according to claim 4, wherein the generated URL is not supplied to the control system by the user.

6. Apparatus according to any of claims 1 to 3, wherein the information displayed in the second region is defined by a second HTML frame appended to a first HTML frame defining a web page selected by the user.

7. Apparatus according to any of the preceding claims, wherein the information displayed in the second region corresponds to a second web page.

8. Apparatus according to any of the preceding claims, wherein the second region forms at least part of a banner on the display.

9. Apparatus according to claim 8, wherein the banner is rectangular.

10. Apparatus according to claim 8 or claim 9 wherein at least one edge of the banner abuts an edge of the display.

11. Apparatus according to claim 10, wherein the banner is elongate in a first direction and has a corresponding elongate edge arranged to abut the edge of the display.

12. Apparatus according to any of claims 8 to 11, wherein the banner extends fully across the display and abuts two opposing edges of the display.

13. Apparatus according to any of claims 8 to 12, wherein the banner includes one or more browser control icons.

14. Apparatus according to any of the preceding claims, arranged such that the user may interact with the second region so as to cause the display of related information within the first region.

15. An Internet access system comprising apparatus according to any of the preceding claims; and an Internet server which can be selectively coupled with the said apparatus.

16. A system according to claim 15, when dependent on claim 4 or claim 5, wherein the Internet server and the apparatus cooperate such that the browser generates a special URL to obtain the information to be displayed in the second region.

17. A system according to claim 16, wherein the Internet server is adapted to update the content of the web page addressed by the special URL.

18. A system according to claim 16 or 17, wherein the Internet served is adapted to redirect the special URL to a different URL.

19. A system according to any of claims 16 to 18, wherein the control system further comprises a non-volatile store in which the special URL is retained.

20. A system according to claim 15, when dependent upon claim 4 or claim 5, wherein the server supplies the browser with the URL which is used to cause the information to be received.

21. A system according to claim 15, when dependent on claim 6, wherein the Internet server appends a second frame to data defined by the web page selected by the user, for displaying in the second region.

22. A system according to any of claims 15 to 21, wherein the information displayed in the second region is regularly updated by the Internet server.

23. A system according to claim 22, wherein the Internet server is adapted to update the said information each time the information is to be refreshed to the apparatus.

24. A system according to claim 22 or claim 23, wherein the Internet server is adapted to monitor the URLs requested by a user and to update the information to be displayed in the second region with related data.

25. A system according to any of claims 15 to 24, further comprising a database in which data is stored relating to the information provided to the browser by the Internet server.

26. A system according to any of claims 15 to 25, wherein the information displayed in the second region is an advertisement.
